Europäisches Patentamt

European Patent Office

Office européen des brevets

(11) Veröffentlichungsnummer: **0 283 524 B1**

## (12) EUROPÄISCHE PATENTSCHRIFT

(45) Veröffentlichungstag der Patentschrift: 02.05.91

(21) Anmeldenummer: 87103017.7

(22) Anmeldetag: 04.03.87

(51) Int. Cl.⁵: **G01L 23/24**, G01L 5/14, G01L 9/04, G01L 9/06

(54) **Verfahren und Anordnung zum Messen von Drücken in rohrförmigen Körpern.**

(30) Priorität: 11.02.87 EP 87101897

(43) Veröffentlichungstag der Anmeldung:
28.09.88 Patentblatt 88/39

(45) Bekanntmachung des Hinweises auf die
Patenterteilung:
02.05.91 Patentblatt 91/18

(84) Benannte Vertragsstaaten:
**AT CH DE FR GB LI SE**

(56) Entgegenhaltungen:
EP-A- 0 041 599      EP-A- 0 130 670
DE-A- 2 635 881      DE-A- 2 649 358
US-A- 3 965 745      US-A- 4 027 536
US-A- 4 147 055

W. JOHNSON: "Plasticity for mechanical engineers", 1971, Reinhold Co., London, GB;

(73) Patentinhaber: **Kistler Instrumente AG
Eulachstrasse 22
CH-8408 Winterthur(CH)**

(72) Erfinder: **Engeler, Paul
Allmendstrasse 13
CH-8500 Frauenfeld(CH)**
Erfinder: **Wolfer, Peter
Alte Steinerstrasse 9
CH-8450 Kleinandelfingen(CH)**

(74) Vertreter: **Schmidt, Horst, Dr.
Siegfriedstrasse 8
W-8000 München 40(DE)**

## Beschreibung

Die Erfindung betrifft ein Verfahren und eine Anordnung zur Messung des Innendruckes in rohrförmigen Körpern.

Solche rohrförmigen Körper werden beispielsweise als Düsen von Spritzgiessmaschinen, bei Einspritzpumpen von Dieselmotoren und als Gewehr- und Geschützrohre verwendet. Sie werden durchströmt von Gasen oder Flüssigkeiten, und die wichtigste zu ermittelnde Messgrösse ist zumeist der Innendruck, entweder, um die Rohre oder daran angeschlossene Aggregate vor Ueberlastung zu schützen, oder um einen Prozess zu kontrollieren oder zu steuern. Oft sind die in Frage kommenden Flüssigkeiten oder Gase heiss - dies ist bei allen oben genannten Anwendungen der Fall - und bereiten dadurch besondere messtechnische Schwierigkeiten.

Die Druckmessung erfolgt bei allen genannten Anwendungen auf mehr oder weniger direkte Art. In der Ballistik beispielsweise wird ein Druckaufnehmer radial in eine Bohrung des Gewehr- oder Geschützrohres eingebaut. Diese Bohrung ist durchgehend. Die Aufnehmer sind mit einer Membrane ausgestattet, welche mit den Explosionsgasen in direktem Kontakt steht. Dies hat den Nachteil, dass der sensible Aufnehmerteil hochkorrosiven Gasen ausgesetzt ist, wodurch die Lebensdauer herabgesetzt wird. Im weiteren verursacht der Temperaturanstieg während der Explosion mechanische Spannungen in der Rohrwand, welche die Messung des Gasdruckes verfälschen können. Bei Spritzgiessmaschinen für Kunststoffe ist einerseits der in der Form selber herrschende Druck, anderseits aber auch der in der Düse herrschende Druck, zwecks Kontrolle und Steuerung des Spritzvorganges, von Interesse. Auch hier kann die hohe Temperatur des Mediums die Druckmessung erheblich komplizieren, indem die Membrane eines Druckaufnehmers beispielsweise beschädigt würde. Zudem entsteht beim Einbringen eines Aufnehmers in eine Bohrung im Bereiche der Membranpartie eines Aufnehmers meistens ein Totvolumen zwischen Aufnehmer und Rohrkörper, in das der flüssige Kunststoff eindringt und sich teilweise verfestigt. Dadurch wird die Qualität der Messung ebenso verschlechtert wie jene des Spritzlings. In allen Fällen können die durch zeitliche und örtliche Temperaturvariationen hervorgerufenen mechanischen Spannungen in Formen und Rohren die Messung des Innendruckes verfälschen.

Bei Einspritzleitungen für Motoren werden zur Druckmessung meistens Sensoren verwendet, die im Medium selbst liegen und dessen Druck direkt messen. Der Einbau der Druckmessgeräte bietet Probleme, namentlich dann, wenn die Leitungen nicht ständig, sondern nur intermittierend überwacht werden sollen. Das Leitungssystem muss dann immer wieder geöffnet und das Messgerät in die Leitung eingeschraubt werden, wodurch das ganze System undicht werden kann. Ausserdem ist das Oeffnen und Verschrauben der Systeme ein zeitraubender, komplizierter Vorgang. Die DE-OS 26 49 358 schlägt für diese Anwendung insofern eine Verbesserung vor, als der Innendruck nicht mehr direkt, sondern indirekt gemessen werden soll, indem der Innendruck einen Wandteil deformiert miert, der eine geringere Wandstärke hat und nach Art einer Membrane elastisch verformt werden kann und die Deformation auf einen Messwertaufnehmer übertragen wird. Aber auch diese Problemlösung trägt der Tatsache, dass bei heissen Medien die Wände durch Temperaturvariation mechanischen Spannungen unterworfen werden, die das Messresultat verfälschen können, keine Rechnung. Zudem herrscht zwischen Deformation des genannten Wandteiles und dem zu messenden Innendruck über weite Bereiche kein linearer Zusammenhang, was einen erheblichen Kalibrierungsaufwand verursacht.

In EP-A- 0041 599 ist ein Aufnehmer dargestellt, welcher an Stelle einer Membrane eine der äusseren Rohrform angepasste dünne Frontplatte aufweist. Das Anpassen an die Rohrform kann jedoch auch hier eine aufwendige Tätigkeit sein. Zudem ist die Druckübertragung ungünstiger als bei einem Aufnehmer mit Membrane. Bei dünnen Rohren muss deren Umfang durch Beifügen von rohrförmigen Körpern vergrössert werden, damit dieser vorgenannte Hülsen-Formdruckaufnehmer der Frontplatte, deren Krümmungsradius nicht beliebig klein gemacht werden kann, angepasst werden kann, was die Anpassung noch komplizierter gestaltet und wodurch die Druckübertragung noch ungünstiger wird.

Bei den bisher genannten Aufrehmern ist weder ein linearer Zusammenhang zwischen Gas- oder Flüssigkeitsdruck (oder zum mindesten zwischen der Differenz zwischen Innen- und Aussendruck) und der Messgrösse über einen weiten Messbereich gewährleistet noch erfolgt eine hinreichende Kompensation der infolge Temperaturgradienten und Störspannungen im Material auftretenden Messfehler. Es ist die Aufgabe der Erfindung, die oben genannten Nachteile zu beheben. Deren Lösung zeichnet sich dadurch aus, dass die durch den Druck erzeugten mechanischen Spannungen an wenigstens einer Stelle längs der Längsachse des rohrförmigen Körpers in radialer und tangentialer Richtung mittels elektromechanischer Wandler erfasst werden, und dass die für die radialen und tangentialen Spannungen massgeblichen Ausgangssignale der Wandler einer Signalverarbeitung unterworfen werden, indem die Ausgangssignale bei gleicher Polung der Wandler subtrahiert und bei ungleicher Polung addiert werden, so dass ein zur Differenz zwischen Innen- und Aussendruck proportionales Messignal erhalten wird, welches zur weiteren Auswertung einer Signalauswerteeinrichtung zugeführt werden kann.

Die erfindungsgemäße Anordnung zeichnet sich aus durch wenigstens ein Paar elektromechanischer Wandler, welche an wenigstens einer Stelle längs der Längsachse des rohrförmigen Körpers angeordnet sind, um die durch den Druck erzeugten mechanischen Spannungen in radialer und tangentialer Richtung zu erfassen und für die radialen und tangentialen Spannungen massgebliche Ausgangssignale zu erzeugen, und eine Signalverarbeitungseinrichtung, an der die Ausgangssignale der Wandler anliegen, zur Schaffung eines zur Differenz zwischen Innen- und Aussendruck proportionalen Messignales, welches einer Signalauswerteeinrichtung zur weiteren Auswertung zuführbar ist.

Bei gleicher Polung der elektromechanischen Wandler kann die Signalverarbeitungseinrichtung eine Subtraktionsschaltung und bei ungleicher Polung eine Additionsschaltung umfassen.

Bei den elektromechanischen Wandlern kann es sich um sog. Längsmessdübel, d.h. um Wandler, die in ihrer Längsrichtung spannungsempfindlich sind, oder um Quermessdübel, die in ihrer Querrichtung spannungsempfindlich sind, handeln.

Eine andere Weiterbildung der Erfindung zeichnet sich dadurch aus, dass die elektromechanischen Wandler in einem als separates Zwischenstück in den rohrförmigen Körper einbaubaren Aufnehmerelement angeordnet sind.

Die Erfindung wird nachfolgend anhand der Zeichnung und bevorzugter Ausführungsform näher erläutert.

In der Zeichnung:

Fig. 1     zeigt im Querschnitt ein Rohr mit radialen und tangentialen Bohrungen zur Aufnahme eines elektromechanischen Wandlers in Gestalt eines Längsmessdübels sowie schematisch die zugehörige Signalverarbeitungseinrichtung gemäss einer Ausführungsform der Erfindung.

Fig. 2     zeigt in Längsschnitt das in Fig. 1 dargestellte Rohr mit zwei längs seiner Längsachse vorgesehenen Messstellen.

Fig. 3     zeigt in schematischer längsgeschnittener Ansicht einen Längsmessdübel für die Anordnung nach Fig. 1.

Fig. 4     zeigt eine schematische Darstellung eines Quermessdübels (Längsschnitt).

Fig. 5     zeigt den Druckverlauf $p_i$ in einer Einspritzdüse als Funktion der Zeit t.

Fig. 6     zeigt die radialen und tangentialen piezoelektrischen Ausgangssignale (Ladungen $Q_r$, $Q_t$)als Funktion der Zeit t.

Fig. 7     zeigt die Summe der radialen und tangentialen piezoelektrischen Ausgangssignale (Ladung Q).

Fig. 8     zeigt eine modifizierte Messanordnung nach der Erfindung mit einem als separates Zwischenstück in den rohrförmigen Körper eingefügten Aufnehmerelement.

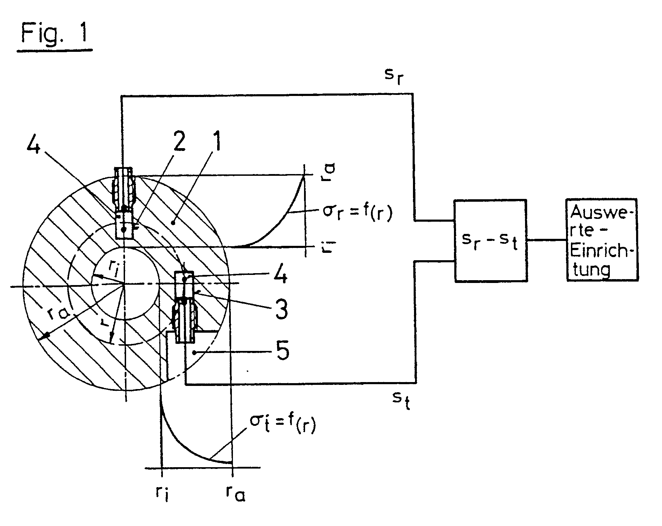

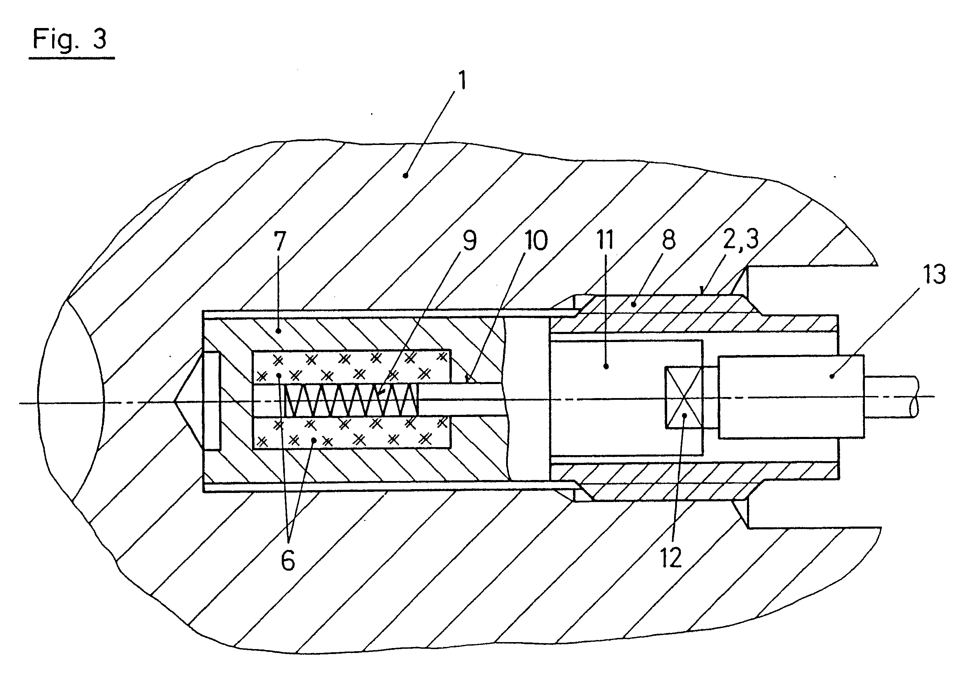

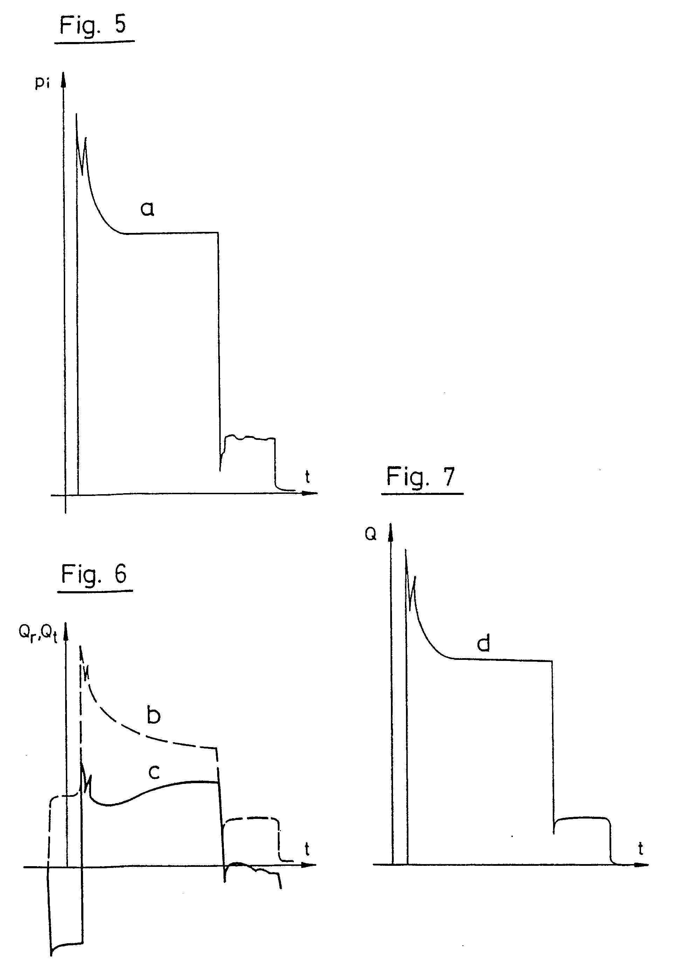

Fig. 1 zeigt den Querschnitt durch ein Rohr an einer bestimmten Stelle in seiner Längserstreckung, dessen Innendruck $p_i$ bestimmt werden soll. Aussen- und Innendurchmesser des Rohres werden mit $r_a$ bzw. $r_i$ bezeichnet. In einer radialen Bohrung 2 ist ein Wandler (Längsmessdübel) 4 eingeführt, welcher die in der Längsrichtung der Bohrung liegenden Spannungen, also die radialen Spannungen $\sigma_r$, misst. Im Detail wird ein solcher Längsmessdübel später in Fig. 3 dargestellt und im dazugehörenden Text beschrieben. In eine tangential verlaufende Bohrung 3 ist ebenfalls ein Längsmessdübel 4 eingeführt. Eine am Rohrumfang angebrachte Ausfräsung 5 ermöglicht ein besseres Einführen des Dübels in die Bohrung und einen besseren Anschlag. In der Figur ist auch der prinzipielle Verlauf der radialen Spannung als Funktion der radialen Entfernung von der Rohrachse $\sigma_r = f(r)$ angegeben, ebenso der prinzipielle Verlauf der tangentialen Spannung $\sigma_t = f(r)$. Eine Erklärung zu diesen Spannungsverläufen erfolgt anlässlich der Beschreibung der Fig. 5 bis 7. Aus Gründen der Messgenauigkeit und Linearität ist es vorteilhaft, die spannungempfindlichen Messstellen der Wandler im wesentlichen auf den gleichen Abstand r von der Längsachse des rohrförmigen Körpers einzustellen. Deshalb ist, bei Verwendung eines Längsmessdübels, die Tiefe der Bohrungen 2, 3 entsprechend zu wählen, bei Verwendung eines Quermessdübels kann die Tiefeneinstellung am Dübel selber vorgenommen werden. In Fig. 1 wird auch die Signalverarbeitung gezeigt. Die Wandler 4 transformieren die radiale mechanische Spannung $\sigma_r$ sowie die tangentiale Spannung $\sigma_z$ in elektrische Signale $s_r$ und $s_t$ In einer darauffolgenden Signalverarbeitungseinrichtung wird die Differenz $s_r$ $s_t$ der elektrischen Signale gebildet. Diese Differenzbildung kann im Falle gleicher elektrischer Polung der beiden Wandler, durch eine Subtraktionsschaltung, im (bevorzugten) Falle ungleicher Polung durch eine Additionsschaltung erfolgen. Das resultierende Signal wird durch eine Auswerteeinrichtung aufgenommen, welche aus einem Messinstrument bestehen kann, das dann die Differenz zwischen Innen- und Aussendruck des rohrförmigen Körpers anzeigt. Die Auswerteeinrichtung kann aber auch zur Prozesssteuerung ausgelegt sein.

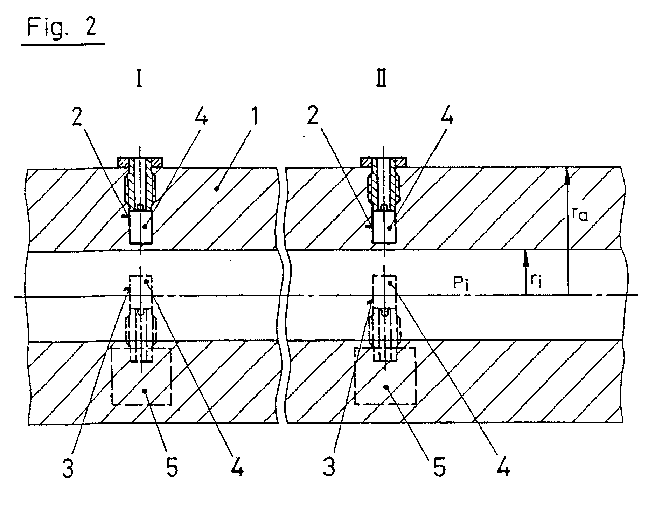

Fig. 2 zeigt einen Längsschnitt durch das in Fig. 1 dargestellte Rohr 1 mit zwei Messstellen I, II, jede mit einer radialen und tangentialen Bohrung 2, 3 (tangentiale Bohrung in Ausfräsung 5), ausgestattet mit je einem Längsmessdübel 4. Ziffern und Symbole haben die gleiche Bedeutung wie in Fig. 1. Die Figur bringt zum Ausdruck, dass es, beispielsweise zur Steuerung einer Einspritzdüse, oft nicht genügt, den Innendruck bloss an einer Stelle der Zuleitung zu messen, sondern dass erst der Druckverlauf längs eines Abschnittes eine Kontrolle des Vorganges ermöglicht.

Fig. 3 zeigt eine schematische Darstellung eines Längsmessdübels, wie er in der bisher beschriebenen Ausführungsform der Erfindung verwendet wird. Der dargestellte Messdübel wird in radiale oder tangentiale Bohrungen 2, 3 des rohrförmigen Körpers 1 eingeführt (dargestellt in Fig. 1), dessen Innendruck gemessen werden soll.

Vorzugsweise ist das Messelement ein piezoelektrisches, aber auch ein piezoresistives oder ein auf Dehnungsmessstreifen basierendes Messelement kann verwendet werden. Wichtig ist ein stabiler Kontakt zwischen dem rohrförmigen Körper 1 und dem Messelement 6 hauptsächlich in der Längsrichtung der Bohrung, damit die in dieser Richtung wirkenden mechanischen Spannungen übertragen werden können (Längsmessdübel). Ebenso muss in dieser Richtung das Messelement vorgespannt sein, damit sowohl Druck- wie Zugspannungen gemessen werden können. Der stabile Kontakt wird dadurch erreicht, dass der Boden des zylinderförmigen Einschliesskörpers 7, der die Spannungsmesselemente 6 enthält, durch Betätigen eines Gewindes 8, das als Aussengewinde an der hülsenförmigen Fortsetzung des Einschliesskörpers als Innengewinde an der Wand der Bohrungen 2, 3 im Rohrkörper 1 angebracht ist, fest an seine Unterlage gepresst wird. Dies geschieht beispielsweise durch Drehen an einem (nicht eingezeichneten) Schraubenkopf während des Einbaus des Längsmessdübels.

Beim gleichen Vorgang wird dem tiefer in der Bohrung liegenden Teil des Messdübels die notwendige mechanische Vorspannung verliehen, so dass sowohl Zug- wie Druckspannungen gemessen werden können. Dargestellt ist in der Zeichnung ferner die Abnahme der elektrischen Ladungen mittels des Leiters 9, die Herausführung des signalableitenden Kabels 10, das über eine Steckerbuchse 11, eine Steckverbindung 12 und einen Stecker 13 nach aussen geführt wird. Je nach der konstruktiven Gestaltung des Spannungsmesselementes 6 kann der positive Pol isoliert nach aussen geführt werden, während der negative an Masse liegt, oder umgekehrt. Dies ermöglicht, dass beispielsweise für Druckbeanspruchung wahlweise ein positives oder ein negatives Signal nach aussen geführt werden kann, was messtechnisch ausgenützt wird, wie später, bei der Beschreibung der Fig. 5, dargelegt wird.

Die Tiefe der Bohrung, in die der Längsmessdübel eingesetzt wird, bestimmt auch die radiale Lage der messempfindlichen Stelle. Sie wird so gewählt, dass die messempfindlichen Stellen des radialen und des tangentialen Messdübels auf demselben Kreis mit dem Radius r liegen (siehe auch Fig. 1).

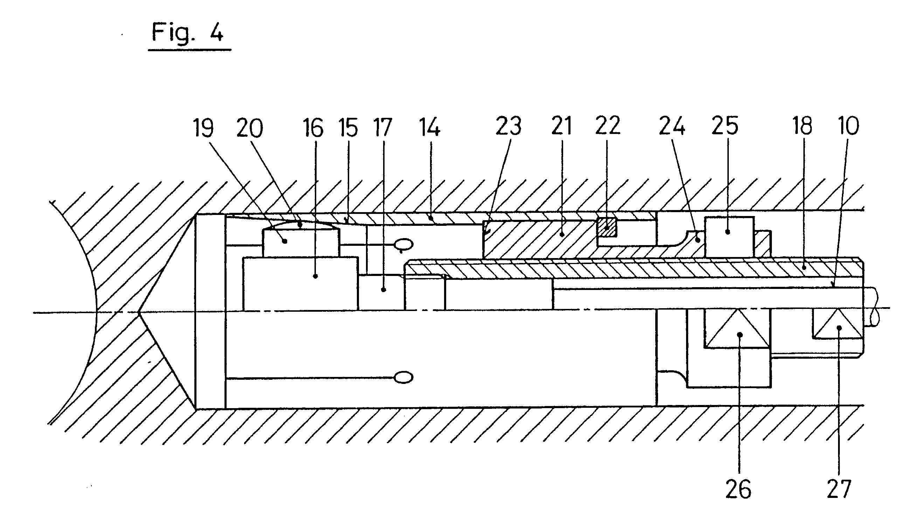

Es gibt viele Möglichkeiten, einen Längsmessdübel mit oder ohne Vorspannungsmöglichkeit zu konstruieren. Auch die Signalableitung und die damit zusammenhängenden Isolationsprobleme können auf verschiedene Arten gelöst werden. Die oben beschriebene Ausführungsform ist somit eine zwar bevorzugte, aber eine von vielen erfindungsgemässen Ausfuhrungsformen eines Längsmessdübels. Dasselbe gilt für den in Fig. 4 dargestellten Quermessdübel.

Fig. 4 zeigt eine schematische Darstellung eines Quermessdübels, d.h. eines Elementes, welches Spannungen quer zu seiner Längsausdehnung misst. Es ist durchaus möglich und erfindungsgemäss, einen Quermessdübel in einer radialen Bohrung zu verankern, wobei er dann die tangentialen Spannungen misst, und ebenso, ein solches Element in einer tangentialen Bohrung anzubringen und damit die radialen Spannungen zu messen. Durch eine solche Messanordnung können dieselben Resultate erzielt werden wie mit der z.B. in Fig. 1 gezeigten Anordnung von Längsmessdübeln.

Der, als Beispiel, in Fig. 4 dargestellte Quermessdübel hat als äussere Begrenzung eine dünnwandige zylindrische Hülse 14, welche an ihrem einen Ende mit einem Innenkonus 15 versehen ist. Das Spannungsmesselement 6 besteht aus einem z.B. Quarzkristallplättchen, enthaltenden Gehäuse 16, an das sich ein rohrförmiger Befestigungsansatz 17 mit Aussengewinde 18 anschliesst, und zwei einander diametral gegenüberliegenden Druckkörpern 19 mit je einer Kugelkalotte 20 zur Krafteinleitung.

Durch den Hohlraum des Befestigungsansatzes 17 ist die elektrische Verbindungsleitung 10 von den Spannungsmesselementen 6 nach aussen geführt. Innerhalb der Hülse 14 ist eine Schraubspindel 21 koaxial angeordnet, welche auf das Aussengewinde des Befestigungsansatzes 17 aufgeschraubt und so mit dem Spannungsmesselement 6 fest verbunden ist. Am freien Ende der Schraubspindel 18 sind zwei planparallele Angriffsflächen 27 zum Ansetzen eines Hilfswerkzeuges (nicht dargestellt), z.B. in Form eines Steckschlüssels, vorgesehen, womit die Schraubspindel 18 von aussen in einer bestimmten Drehwinkellage gehalten werden kann. Zur axialen Verschiebung der Schraubspindel 18 ist eine auf diese aufgeschraubte Bewegungsmutter 21 vorgesehen, die an der Innenseite der Hülse 14 radial geführt und axial beidseitig gelagert ist. Als Axiallager dient ein in eine Ringnut an der Hülse 14 eingesetzter Sprengring 22 und eine Stufe 23. Die Bewegungsmutter 21 weist einen zylindrischen Ansatz 25 auf, der über das äussere Axiallager 22 hinausragt. Dieser Ansatz 25 trägt einen radialen Zapfen 26, an den ein Hilfswerkzeug (nicht dargestellt) zum Verschieben der Messvorrichtung in axialer Richtung und zum Verdrehen der Bewegungsmutter ansetzbar ist.

Durch Verdrehen der Bewegungsmutter 21 lässt sich die mit dem Hilfswerkzeug gegen Verdrehung gesicherte Schraubspindel 18 axial verschieben, so dass das Spannungsmesselement 6 in die Hülse 14 hineingezogen und im Bereich des Innenkonus 15 verspannt wird, wobei die Kugelkalotten 20 des Messelementes 6 mit dem Innenkonus 15 der Hülse 14 unmittelbar zusammenwirken. Auf diese Weise wird sowohl die gesamte Messvorrichtung innerhalb der Bohrung durch Reibungsschluss zwischen Hülse 14 und Bohrungswandung axial fixiert als auch das Messelement 6 vorgespannt. Bei einer dünnwandigen, z.B. aus gezogenem Stahlrohr hergestellten Hülse kann deren Formelastizität unter Umständen ausreichen, um die nur an zwei diametralen Stellen auf den Innenkonus 15 ausgeübte Spannkraft ohne übermässigen Kraftaufwand an der Bewegungsmutter 21 nach aussen zu übertragen. Für die Einstellung der gewünschten radialen Entfernung der spannungsempfindlichen Messstelle von der Längsachse des rohrförmigen Körpers sowie zur Ajustierung der Richtung maximaler Spannungsempfindlichkeit in azimutaler Richtung (siehe auch Beschreibung zu Fig. 1) sind Mittel (25, 26, 27) zum Halten der Messvorrichtung in einer bestimmten Axial- und Drehwinkellage innerhalb einer Bohrung vorhanden.

Fig. 5 zeigt den zeitlichen Druckverlauf $p_i$ = f (t) in einer Einspritzdüse für ein Kunststoff-Spritzaggregat(Kurve a). Führt man in der Wandung der Einspritzdüse die in Fig. 1 dargestellten radialen und tangentialen Spannungsmessungen durch - beispielsweise mittels Längsmessdübeln gemäss Fig. 3 - so erhält man, im Falle eines piezoelektrischen Messelementes, die piezoelektrischen Ausgangssignale, deren zeitlicher Verlauf in der Figur 6 (Kurve b' radial, Kurve c' tangential) dargestellt ist ($Q_r$: $Q_t$: elektrische Ladungen). Addiert man die radialen und tangentialen Ausgangssignale $Q_r$ und $Q_t$, d.h. die Kurven 6b und 6c, so ergibt sich die in der Fig. 7 dargestellte Kurve, welche exakt den tatsächlichen zeitlichen Verlauf des Innendruckes $P_i$, wie in Fig. 5 dargestellt, wiedergibt (genauer: $p_i$ $p_a$, $p_a$ verschwindet bei grossem $p_i$). Die Addition der beiden genannten Signale erfolgt natürlich auf elektrischem Wege. Wichtig ist, dass während des Experimentes (d.h. des Einspritzens) längs des Rohres Zug- und Druckspannungen herrschen können (und tatsächlich herrschen), aber auch Temperaturschwankungen, die auf das Messergebnis keinen ins Gewicht fallenden Einfluss ausüben, da die Addition der Signale deren Einfluss kompensiert. Zudem ist von Bedeutung, dass die Summe der beiden Signale (Fig. 7) den Verlauf der Druckdifferenz $p_i$ $p_a$ genauer darstellt als jedes einzelne Signal (Fig. 6b für das radiale, Fig. 6c für das tangentiale Signal).

Diese für die Praxis äusserst günstigen Sachverhalte sollen nachstehend begründet werden.

Die Formeln, welche die Spannungsverteilung in einem dickwandigen Rohr darstellen, welches einem Innendruck $p_i$ und einem Aussendruck $p_a$ ausgesetzt ist, sind in verschiedenen Ingenieur-Handbüchern enthalten, so z.B. in "Plasticity for Mechanical Engineers" W. Johnson, Van Nostrand, Reinhold Company, London 1971, S. 157, Formel 9.55.

Für die Differenz zwischen radialer Spannung $\sigma_r$ und tangentialer Spannung $\sigma_t$ ergibt sich

$$\sigma_r - \sigma_t = 2 \, \frac{r_i^2 \cdot r_a^2 \, (p_i - p_a)}{r_a^2 - r_i^2} \cdot \frac{1}{r^2}$$

wobei $r_i$ den Innenradius, $r_a$ den Aussenradius, r den gewählten Messradius (in Fig. 1 gestrichelt gezeichnet) des rohrförmigen Körpers, $p_a$ den Aussendruck und $p_i$ den Innendruck bedeuten.

Die Druckdiffenz ist somit proportional zur Spannungsdifferenz $\sigma_r$-$\sigma_t$, wodurch der Verlauf der Kurve d in Fig. 7 im Vergleich zu jener in Fig. 5 (Verlauf der Druckdifferenz $p_i$-$p_a$, wobei bei vergleichsweise hohem Innendruck $p_i$ der Aussendruck $p_a$ vernachlässigt werden kann, im Vergleich zum Verlauf der Spannungsdifferenz $\sigma_r$-$\sigma_t$) prinzipiell erklärt ist. Zudem genügt es gemäss der obenstehenden Formel, die radiale und tangentiale Spannung beim gleichen Radius r zu messen, um Proportionalität zwischen Druckdifferenz und Spannungsdifferenz zu erreichen. Welcher Radius gewählt wird, ist in dieser Hinsicht belanglos.

Proportionalität zwischen der Druckdifferenz und der radialen oder der tangentialen Spannung allein ist nicht gegeben. Es ist somit ein einzigartiger Vorteil der Erfindung, durch Anwendung der obenstehenden Formel und einer Messanordnung zur Messung der radialen und tangentialen Spannungen in einem rohrförmigen Körper Proportionalität zwischen der Differenz der radialen und tangentialen Spannung und der Differenz zwischen Aussen- und Innendruck zu schaffen.

Wenn in einem rohrförmigen Körper ein den Aussendruck übersteigender Innendruck herrscht, so treten radial Druckspannungen (negativ), tangential Zugspannungen (positiv) auf. Die Differenzbildung $\sigma_r$-$\sigma_t$ kann somit als Addition einer radialen Druckspannung und einer tangentialen Zugspannung aufgefasst werden, wenn bei der Druckspannung eine Vorzeichenumkehr erfolgt, was durch eine umgekehrte Polarisierung der piezoelektrischen Ausgangssignale erreicht werden kann.

Dies kommt zum Ausdruck in den Figuren 6 und 7, indem für die Bildung der Kurve d von Fig. 7 die Summe der in der Figuren 6 dargestellten radialen (Kurve b, gestrichelt) und tangentialen (Kurve c, ausgezogen) piezoelektrischen Signale gebildet wurde.

Die Differenzbildung $\sigma_r$-$\sigma_t$ hat weiterhin zur Folge, dass alle Zusatzspannungen, die sich auf die Radialspannung $\sigma_r$ und die Tangentialspannung $\sigma_t$ gleichartig auswirken, im wesentlichen verschwinden, da sie bei der Subtraktion im Minuenden wie im Subtrahenden auftreten. Dazu gehören Spannungen, die infolge von Temperaturgradienten auftreten. Auch Längsspannungen (sowohl Druck-als auch Zugspannungen) spielen infolge der oben dargelegten Bildung der piezoelektrischen Ausgangssignale praktisch keine Rolle.

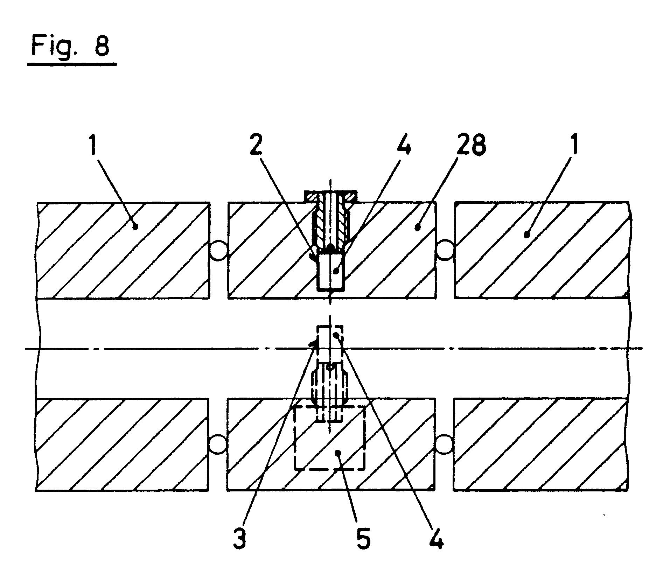

Eine weitere in der Praxis bedeutsame Messanordnung nach der Erfindung zeigt Fig. 8. Die Anordnung nach Fig. 8 unterscheidet sich von derjenigen nach Fig. 1 im wesentlich dadurch, daß die radialen und tangentialen elektromechanischen Wandler 4, anstatt direkt am rohrförmigen Körper 1, in einem als separates rohrförmiges Zwischenstück ausgebildeten und in den rohrförmigen Körper 1 eingefügten Aufnehmerelement 28 angeordnet sind. Wie dargestellt, sind im rohrförmigen Zwischenstück die radiale bzw. tangentiale Bohrung 2, 3 mit den zugehörigen elektromechanischen Wandlern 4 (die hier als Längsmessdübel ausgebildet sind, doch können auch andere Ausführungen verwendet werden) sowie die am Umfang ausgebildete Ausfräsung 5 analog zu Fig. 1 vorgesehen. Das Aufnehmerelement nach Fig. 8 kann separat kalibriert und nachträglich eingebaut werden. Der Einbau (nur schematisch dargestellt) kann beispielsweise über am rohrförmigen Körper 1 und Aufnehmerelement 28 vorgesehene Gewinde erfolgen. Zwischen dem rohrförmigen Körper 1 und dem Aufnehmerelement 28 ist eine geeignete Abdichtung, z.B. mittels der in Fig. 8 gezeigten O-Ringe, vorzusehen. Bezüglich weiterer Details kann auf Fig. 1 und die zugehörige Beschreibung verwiesen werden.

Erfindungsgemäss können die Radial- und Tangentialspannungen sowohl mit Längs- als auch mit Quermessdübeln gemessen werden. Selbstredend ist die Erfindung nicht auf das dargelegte Beispiel einer Einspritzdüse für das Spritzgiessen beschränkt, sondern erstreckt sich auf die Druckmessung in allen rohrförmigen Körpern. Sie umfasst somit u.a. auch ballistische und hydraulische Anwendungen. Desgleichen ist die Erfindung nicht auf piezoelektrische Wandler beschränkt. Auch piezoresistive Wandler oder Dehnungsmessstreifen können eingesetzt werden. Es ist zu beachten, dass die Differenzbildung $\sigma_r$-$\sigma_t$ in diesen Fällen durch umgekehrte elektrische Polung der Ausgangssignale der Vorverstärker ebenfalls in eine Summenbildung elektrischer Signale verwandelt werden kann.

Die vorliegende Erfindung macht es erstmalig möglich, die Differenz zwischen Innen- und Aussendruck bei einem rohrförmigen Körper als lineare Funktion eines elektrischen Ausgangssignals zu messen und die Störeinflüsse von Temperaturgradienten und Längsspannungen zu eliminieren. Die Elimination des Temperatureinflusses (und der damit verbundenen Längsspannungen) ist speziell dort notwendig, wo bei höheren Temperaturen gearbeitet wird, also beispielsweise bei Einspritzpumpen von Motoren, bei Einspritzdüsen oder im übrigen hydraulischen Teil von Spritzgiessmaschinen sowie bei ballistischen Anwendungen. Der Temperatureinfluss erzeugt gerade bei diesen Anwendungen indirekt auch Längsspannungen , die durch die gleiche Messanordnung und das gleiche Messverfahren praktisch eliminiert werden können.

**Ansprüche**

1. Verfahren zur Messung des Druckes in einem rohrförmigen Körper, dadurch gekennzeichnet, dass die durch den Druck erzeugten mechanischen Spannungen an wenigstens einer Stelle längs der Längsachse des rohrförmigen Körpers in radialer und tangentialer Richtung mittels elektromechanischer Wandler erfasst werden, und dass die für die radialen und tangentialen Spannungen massgeblichen Ausgangssignale der Wandler einer Signalverarbeitung unterworfen werden, indem die Ausgangssignale bei gleicher Polung der Wandler subtrahiert und bei ungleicher Polung addiert werden, so daß ein zur Differenz zwischen Innen- und Aussendruck proportionales Messsignal erhalten wird, welches zur weiteren Auswertung einer Signalauswerteeinrichtung zugeführt werden kann.

2. Verfahren nach Anspruch 1, dadurch gekennzeichnet, dass die Spannungen in radialer und tangentialer Richtung in im wesentlichen dem gleichen radialen Abstand von der Mittellängsachse des rohrförmigen Körpers erfasst werden.

3. Verfahren nach Anspruch 1 oder 2, dadurch gekennzeichnet, dass zur Anordnung der Wandler in die Wand des rohrförmigen Körpers im wesentlichen radiale und tangentiale Bohrungen eingebracht werden.

4. Verfahren nach Ansprüchen 2 und 3, dadurch gekennzeichnet, dass bei längsempfindlichen Wandlern die Bohrungen bis zu einer Tiefe im wesentlichen gleich dem radialen Abstand eingebracht werden.

5. Verfahren nach Ansprüchen 2 und 3, dadurch gekennzeichnet, dass bei querempfindlichen Wandlern diese durch Verschieben und/oder Verdrehen längs bzw. relativ zu den Bohrungen auf den radialen Abstand eingestellt werden.

6. Anordnung zur Messung des Druckes in einem rohrförmigen Körper, gekennzeichnet durch wenigstens ein Paar elektromechanischer Wandler (4), welche an wenigstens einer Stelle längs der Längsachse des rohrförmigen Körpers angeordnet sind, um die durch den Druck erzeugten mechanischen Spannungen in radialer und tangentialer Richtung zu erfassen und für die radialen und tangentialen Spannungen massgebliche Ausgangssignale zu erzeugen, und eine Signalverarbeitungseinrichtung, an der die Ausgangssignale der Wandler (4) anliegen, zur Schaffung eines zur Differenz zwischen Innen- und Außendruck proportionalen Messignales, welches einer Signalauswerteeinrichtung zur weiteren Auswertung zuführbar ist.

7. Anordnung nach Anspruch 6, dadurch gekennzeichnet, dass bei gleicher Polung der elektromechanischen Wandler (4) die Signalverarbeitungseinrichtung eine Subtraktionsschaltung umfasst.

8. Anordnung nach Anspruch 6, dadurch gekennzeichnet, dass bei ungleicher Polung der elektromechanischen Wandler (4) die Signalverarbeitungseinrichtung eine Additionsschaltung umfasst.

9. Anordnung nach einem der Ansprüche 6 bis 8, dadurch gekennzeichnet, dass die elektromechanischen Wandler (4) in ihrer Längsrichtung spannungsempfindlich sind.

10. Anordnung nach einem der Ansprüche 6 bis 8, dadurch gekennzeichnet, dass die elektromechanischen Wandler (4) quer zu ihrer Längsrichtung spannungsempfindlich sind.

11. Anordnung nach einem der Ansprüche 6 bis 10, dadurch gekennzeichnet, dass als elektromechanische Wandler (4) piezoelektrische, piezoresistive oder solche auf Basis von Dehnungsmesstreifen vorgesehen sind.

12. Anordnung nach einem der Ansprüche 6 bis 11, dadurch gekennzeichnet, daß die elektromechanischen Wandler (4) in einem als separates Zwischenstück in den rohrförmigen Körper einbaubaren Aufnehmerelement (28) angeordnet sind.

## Claims

1. A method for measuring the pressure inside a tubular body, characterized by the detection at one point at least along the longitudinal axis of the tubular body of the mechanical stresses set up by the pressure, in the radial and tangential directions by means of electromechanical transducers, and by signal processing of the output signals from the transducers for the radial and tangential stresses, in that the signals are subtracted if the transducers have like polarity and added in the case of unlike polarity, so that a measuring signal proportional to the difference between the internal and external pressures is obtained which may be led into a signal evaluation facility for further evaluation.

2. Method according to Claim 1, characterized by the stresses in the radial and tangential directions being detected at essentially equal radial distance from the longitudinal centerline of the tubular body.

3. Method according to Claims 1 or 2, characterized by the provision of essentially radial and tangential holes for positioning the transducers in the wall of the tubular body.

7

4. Method according to Claims 2 and 3, characterized by the holes for longitudinally sensitive transducers being sunk to a depth substantially equal to the radial distance.

5. Method according to Claims 2 and 3, characterized by transversely sensitive transducers being adjustable to the radial distance by shifting them longitudinally and/or rotating them in relation to the holes.

6. Arrangement for measuring the pressure in a tubular body, characterized by at least one pair of electromechanical transducers (4) located at one point at least along the longitudinal axis of the tubular body, for detecting the mechanical stresses set up by the pressure in the radial and tangential directions, and for generating the output signals analogous to the radial and tangential stresses, also a signal processing facility receiving the output signals from the transducers (4) and providing a measuring signal proportional to the difference between the internal and external pressures, which can then be led into a facility for further signal evaluation.

7. Arrangement according to Claim 6, characterized by the signal processing facility having a subtraction circuit for like polarity of the electromechanical transducers (4).

8. Arrangement according to Claim 6, characterized by the signal processing facility having an adding circuit for unlike polarity of the electromechanical transducers (4).

9. Arrangement according to Claims 6, 7 and 8, characterized by the electromechanical transducers (4) being sensitive to stress in their longitudinal direction.

10. Arrangement according to Claims 6, 7 and 8, characterized by the electromechanical transducers (4) being sensitive to stress in their transverse direction.

11. Arrangement according to Claims 6, 7, 8, 9 and 10, characterized by the use of piezoelectric, piezoresistive or strain-gauge-based sensors as electromechanical transducers (4).

12. Arrangement according to Claims 6, 7, 8, 9, 10 and 11, characterized by the electromechanical transducers (4) being located in a transducer element (28), which can be fitted into the tubular body as a separate intermediate piece.

**Revendications**

1. Procédé pour la mesure de la pression dans un corps de forme tubulaire caractérisé par le fait que les contraintes mécaniques engendrées par la pression sont mesurées au moins en un point du corps de forme tubulaire dans les directions radiale et tangentielle au moyen de convertisseurs électro-mécaniques et que les signaux de sortie des convertisseurs déterminants pour les contraintes radiales et tangentielles sont traités, en ce sens que les signaux de sortie sont soustraits l'un de l'autre lorsque les convertisseurs sont de même polarités et additionnés lors de polarités différentes, de sorte à obtenir un signal de mesure proportionnel à la différence entre pression intérieure et extérieure qui est dirigé vers une installation de traitement des signaux pour exploitation des résultats de mesure.

2. Procédé selon revendication de brevêt 1 caractérisé par le fait que les contraintes en direction radiale et tangentielle sont saisies essentiellement à la même distance radiale de l'axe longitudinal du corps de forme tubulaire.

3. Procédé selon revendication de brevêt 1 ou 2 caractérisé par le fait que des alésages radiaux et tangentiels sont aménagés dans la paroi du corps de forme tubulaire pour la mise en place des convertisseurs.

4. Procédé selon revendication de brevêt 2 et 3 caractérisé par le fait que dans le cas de convertisseurs à sensibilité longitudinale les alésages peuvent être réalisés jusqu'à une profondeur sensiblement équivalente à la distance radiale.

5. Procédé selon revendications de brevêt 2 et 3 caractérisé par le fait que dans le cas de convertisseurs à sensibilité transversale, ceux-ci peuvent être ajustés à la distance radiale par déplacement et/ou par rotation le long resp. par rapport aux alésages.

6. Dispositif de mesure de la pression dans un corps de forme tubulaire caractérisé par le fait qu'au moins une paire de convertisseurs électromécaniques est disposée en, au moins, un emplacement le long de l'axe longitudinal du corps de forme tubulaire pour saisir les contraintes mécaniques radiales et tangentielles engendrées par la pression et pour initier les signaux de sortie représentatifs des contraintes radiales et tangentielles, et qu'une installation de traitement des signaux à laquelle parviennent les signaux de sortie des convertisseurs permet d'engendrer un signal de mesure proportionnel à la différence entre pression intérieure et extérieure qui est amené à une installation d'exploitation des résultats de mesure pour exploitation ultérieure.

7. Dispositif selon revendication 6 caractérisé par le fait que pour une même polarité des convertisseurs électro-mécaniques (4), l'installation de traitement des signaux possède un circuit de soustraction.

8. Dispositif selon revendication 6 caractérisé par le fait que pour des polarités différentes des convertisseurs électro-mécaniques (4) l'installation de traitement des signaux possède un circuit d'addition.

9. Dispositif selon l'une des revendications 6 à 8 caractérisé par le fait que les convertisseurs électro-mécaniques (4) sont sensibles aux contraintes selon leur axe longitudinal.

10. Dispositif selon l'une des revendications 6 à 8 caractérisé par le fait que les convertisseurs électro-mécaniques (4) sont sensibles aux contraintes normales à leurs axes longitudinals.

11. Dispositif de mesure selon l'une des revendications 6 à 10 caractérisé par le fait que les convertisseurs électro-mécaniques (4) prévus peuvent être du type piézo-élecriques, piézo-résistifs ou basés sur le principe des jauges de contrainte.

12. Dispositif selon l'une des revendications 6 à 11 caractérisé par le fait que les convertisseurs électro-mécaniques (4) sont aménagés dans une pièce intermédiaire (28) qui s'intercalle dans le corps de forme tubulaire (1).

## Fig. 1

Fig. 2

I                    II

2      4      1    2      4

$r_a$

$P_i$        $r_i$

3    5    4    3    5    4

Fig. 3

EP 0 283 524 B1

EP 0 283 524 B1

Fig. 4

13

Fig. 5

Fig. 6

Fig. 7

## Fig. 8